Europäisches Patentamt

(19) European Patent Office

Office européen des brevets

(11) Veröffentlichungsnummer: **0 083 036**
**B1**

(12) **EUROPÄISCHE PATENTSCHRIFT**

(45) Veröffentlichungstag der Patentschrift:
**17.04.85**

(51) Int. Cl.⁴: **B 60 L 3/00**

(21) Anmeldenummer: **82111692.8**

(22) Anmeldetag: **16.12.82**

(54) **Losfahrschutz für ein Elektrofahrzeug.**

(30) Priorität: **24.12.81 DE 3151287**

(43) Veröffentlichungstag der Anmeldung:
**06.07.83 Patentblatt 83/27**

(45) Bekanntmachung des Hinweises auf die Patenterteilung:
**17.04.85 Patentblatt 85/16**

(84) Benannte Vertragsstaaten:
**BE CH FR GB IT LI NL SE**

(56) Entgegenhaltungen:
**FR - A - 2 236 299**
**GB - A - 465 592**
**GB - A - 497 712**
**US - A - 3 673 379**
**US - A - 3 904 947**

(73) Patentinhaber: **BROWN, BOVERI & CIE**
**Aktiengesellschaft, Kallstadter Strasse 1,**
**D-6800 Mannheim 31 (DE)**

(72) Erfinder: **Kahlen, Hans, Dr., Holbeinstrasse 11,**
**D-6940 Weinheim (DE)**
Erfinder: **Angelis, Jürgen, Dipl.-Ing., Strassburger**
**Ring 32, D-6800 Mannheim 71 (DE)**

(74) Vertreter: **Kempe, Wolfgang, Dr. et al, c/o Brown, Boveri**
**& Cie AG Postfach 351, D-6800 Mannheim 1 (DE)**

## Beschreibung

Die Erfindung betrifft einen Losfahrschutz für ein Elektrofahrzeug, welches Antriebsaggregat, Energiespeicher, Ausschalter zwischen Energiespeicher und Antriebsaggregat, wenigstens ein auf den Ausschalter einwirkendes Steuerelement und ein Bordladegerät mit Anschlußleitung und Netzstecker zum Anschluß an ein stationäres elektrisches Netz aufweist.

Das Bordladegerät eines Elektrospeicherfahrzeuges wird zum Aufladen des Energiespeichers mit Hilfe einer Anschlußleitung und Netzstecker mit dem stationären elektrischen Netz verbunden. Aus Sicherheitsgründen und um Beschädigungen zu vermeiden, ist es vorgeschrieben, daß sich Elektrofahrzeuge solange nicht mit eigener Kraft bewegen lassen dürfen, solange sie mit dem elektrischen Versorgungsnetz verbunden sind.

Es wurden verschiedene Losfahrschutzarten vorgeschlagen. Ein Losfahrschutz besteht darin, daß bei in die Netzsteckdose eingesteckten Netzstecker durch die am Bordladegerät anliegende Netzspannung ein Relais angesteuert wird, das einen Steuerstromkreis unterbricht und das Öffnen des zwischen Energiespeicher und Antriebsaggregat liegenden Ausschalters bewirkt. Dieser Losfahrschutz ist jedoch nicht wirksam, wenn die Netzspannung fehlt (Sicherung gefallen, Steckdose abgeschaltet, Netz gestört).

Zur Vermeidung dieses Nachteils wurde auch vorgeschlagen, die Anschlußleitung nebst Netzstecker in einem verschließbaren, am Fahrzeug befestigten Gehäuse unterzubringen. Der Gehäusedeckel wirkt auf einen Endschalter ein, der die Losfahrsperre erst aufhebt, wenn der Deckel vollständig geschlossen ist. Das Schließen des Deckels ist jedoch nur möglich, wenn die Anschlußleitung mit dem Netzstecker sich vollständig in dem Gehäuse befinden. Nachteilig ist hierbei, daß durch Deformation des Deckels bzw. durch gewaltsames Schließen, oder durch andere Ursachen der Endschalter betätigt und die Losfahrsperre aufgehoben werden kann, auch wenn die Anschlußleitung nebst Netzstecker sich nicht in dem Gehäuse befinden. Ein zuverlässiger Schutz gegen Losfahren ist daher durch diese Lösung nicht gegeben.

Aufgabe der Erfindung ist es, einen Losfahrschutz für ein Elektrofahrzeug mit Bordlader zu schaffen, der bei an ein stationäres elektrisches Netz angeschlossenem Ladegerät unter Vermeidung eingangs genannter Nachteile einen zuverlässigen Schutz gegen Losfahren gewährleistet.

Diese Aufgabe wird dadurch gelöst, daß das Elektrofahrzeug eine Bordsteckdose aufweist, in die der Netzstecker einsteckbar ist, und daß wenigstens ein Kontakt der Steckdose durch eine elektrische Leitung mit den elektrischen Anschlüssen einer das Steuerelement beeinflussenden Steuereinrichtung verbunden ist, derart, daß nur bei in die Bordsteckdose eingestecktem Netzstecker ein Steuersignal für das Steuerelement auslösender Überwachungsstromkreis schließbar ist. Die Losfahrsperre wird erst dann aufgehoben, wenn der Netzstecker des Bordladegerätes in die Bordsteckdose eingesteckt ist. Dann ist der Überwachungsstromkreis geschlossen und die Steuereinrichtung wirkt, sofern ggf. weitere überwachte Betriebsbedingungen erfüllt sind, auf das Steuerelement ein, welches den Fahrstromkreis einschaltet.

Sobald der Netzstecker aus der Bordsteckdose gezogen wird, wird der Überwachungsstromkreis unterbrochen. Dies führt zum Öffnen des zwischen Energiespeicher und Antriebsaggregat befindlichen Ausschalters und damit zum Unterbrechen des Fahrstromkreises.

In vorteilhafter Ausgestaltung der Erfindung besteht zwischen den elektrischen Anschlüssen der Steuereinrichtung und dem Bordladergehäuse, das mit dem Schutzkontakt des Netzsteckers verbunden ist, eine galvanische Verbindung.

In vorteilhafter Weise ist zwischen Steuereinrichtung und Bordladergehäuse eine Spannungsquelle angeschlossen, die die Steuereinrichtung elektrisch versorgt. Vorzugsweise findet als Spannungsquelle die Bordnetzbatterie Anwendung, die immer in einem Elektrofahrzeug neben der Traktionsbatterie (Fahrbatterie) zur Spannungsversorgung der Beleuchtung, elektrischen Überwachung usw. vorhanden ist.

Von besonderem Vorteil ist die beanspruchte Ausgestaltung für einen Losfahrschutz, bei dem das Steuerelement im Überwachungsstromkreis liegt. Auf diese Weise können auch Störungen in der Steuereinrichtung nicht zu einer Aufhebung der Losfahrsperre führen, da auf jeden Fall der Stecker in die Bordsteckdose eingesteckt sein muß, um einen Stromfluß im Überwachungsstromkreis, der das Steuerelement betreibt, zu ermöglichen.

Vorzugsweise ist das Steuerelement eine auf den Ausschalter einwirkende Relaisspule. Bei Stromfluß schließt die Relaisspule die Ausschaltkontakte zwischen Energiespeicher und Antriebsaggregat. Im stromlosen Zustand bleiben die Ausschaltkontakte geöffnet.

Einem weiteren vorteilhaften Merkmal der Erfindung zufolge, setzt sich der Überwachungsstromkreis zusammen aus: Schutzkontakte der Steckdose, elektrische Verbindungsleitung zur Steuereinrichtung und Verbindungsleitung zwischen Steuereinrichtung und Bordladergehäuse, welches mit einem Schutzkontakt des Netzsteckers verbunden ist. Sobald der Schutzkontakt der Bordsteckdose bei eingestecktem Netzstecker mit dem Schutzkontakt des Netzsteckers in Verbindung steht, ist der außerhalb der Steuereinrichtung befindliche Stromkreis geschlossen. Sofern auch andere, durch die Steuereinrichtung erfaßte Betriebszustände erfüllt sind, gibt die Steuereinrichtung die Losfahrsperre frei. Dies kann entweder durch entsprechende Beeinflussung des Steuerelementes erfolgen oder, sofern das Steuerelement im Überwachungsstromkreis liegt, durch Schließen dieses Überwachungsstromkreises. Der Netzstecker des Bordladers befindet sich im Fahrbetrieb in der Steckdose und schließt über seinen Erdkontakt den Überwachungsstromkreis. Damit werden gleichzeitig die Erdungsverhältnisse des Fahrzeuges überwacht. Ist beispielsweise im Netzstecker oder in der Anschlußleitung ein Erdleiter defekt, wird der Überwachungsstromkreis nicht geschlossen, und das Fahrzeug läßt sich nicht einschalten. Der Fehler kann rechtzeitig vor einem erneuten Ladevorgang erkannt werden. Befindet sich der Netzstecker nicht in der Bordsteckdose oder ist der Erdleiter unterbrochen, so ist das Fahrzeug nicht einschaltbereit.

Es ist auch vorteilhaft, daß die Steuereinrichtung über wenigstens zwei elektrische Leitungen mit wenigstens zwei Polkontakten der Bordsteckdose verbunden ist, derart, daß bei in die Bordsteckdose eingestecktem Stecker über die Eingangsimpedanz des Bordladers der Überwachungsstromkreis geschlossen ist. Die Eingangsimpedanz des Bordladers ist meist niederohmig und wird beispielsweise durch einen Transformator gebildet. Besonders vorteilhaft ist es, wenn die Steuereinrichtung die Eingangsimpedanz des Bordladers berücksichtigt. Ein Ausfallen des Losfahrschutzes, beispielsweise durch Überbrücken der Polkontakte der Steckdose, wird vermieden.

Zusätzlich zur eben beschriebenen Ausgestaltung kann in besonders vorteilhafter Weise ein Polkontakt der Bordsteckdose mit einem Schutzkontakt verbunden sein. Hierdurch erhält man eine doppelte Sicherheit. Zum einen spricht die Steuereinrichtung auf die Eingangsimpedanz des Bordladers an, zum anderen überwacht sie die Erdungsverhältnisse des Fahrzeugs. Das heißt, die Losfahrsperre kann lediglich dann aufgehoben werden, wenn der Netzstecker in die Bordsteckdose eingesteckt ist und die Erdung der Anschlußleitung des Bordladegeräts keinen Defekt (Unterbrechung des Erdleiters, Kurzschluß) aufweist.

In zweckmäßiger Weiterbildung der Erfindung ist die Steuereinrichtung Teil einer Steuerlogik, die neben dem Losfahrschutz andere Steuer- und Schutzfunktionen ausführt.

An Hand der Zeichnung, in der mehrere Ausführungsbeispiele der Erfindung gezeigt sind, sollen die Erfindung sowie weitere vorteilhafte Ausgestaltungen und Weiterbildungen näher erläutert werden. Es zeigt

Fig. 1 eine Schaltungsanordnung für einen Antrieb eines Elektrofahrzeuges und einen Losfahrschutz mit Überwachung durch die Schutzleitungen,

Fig. 2 eine Schaltungsanordnung für einen Losfahrschutz mit Überwachung durch zwei Polleitungen und

Fig. 3 eine Schaltungsanordnung gemäß Fig. 2 mit Erdung einer Polleitung.

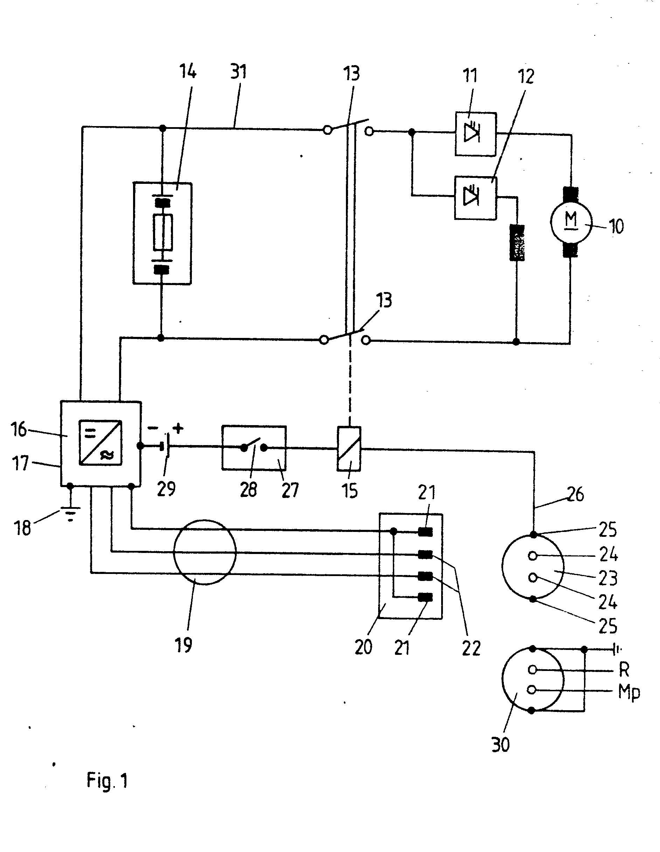

Die Fig. 1 zeigt eine fremderregte Gleichstrommaschine 10 mit einem Stellglied 11 für den Ankerstrom und einem Stellglied 12 für den Feldstrom. Über zwei Schaltkontakte 13 eines Hauptschützes ist die Gleichstrommaschine 10 mit einem Energiespeicher 14, der Fahrbatterie, verbunden. Die Schaltkontakte 13 werden durch ein Steuerelement 15 in Form der Magnetspule des Hauptschützes betätigt.

Die beiden Pole des Energiespeichers 14 sind mit der Gleichstromseite eines Bordladegerätes 16 verbunden. Das Bordladergehäuse 17 liegt auf Masse 18. Der Wechselspannungseingang des Bordladegerätes 16 ist über eine Anschlußleitung 19 mit einem Netzstecker 20 verbunden, der neben zwei miteinander verbundenen Schutzkontakten 21 zwei Polkontakte 22 aufweist.

Der Netzstecker 20 ist in eine Bordsteckdose 23 einsteckbar. Auch die Bordsteckdose 23 weist zwei Polkontakte 24 sowie zwei miteinander elektrisch verbundene Schutzkontakte 25 auf. Die Schutzkontakte 25 der Bordsteckdose 23 sind durch eine elektrische Verbindungsleitung 26 mit einem Anschluß des Steuerelementes 15, welches die Schaltkontakte 13 beeinflußt, verbunden. Der andere Anschluß des Steuerelementes 15 führt zur Steuereinrichtung 27.

In der Steuereinrichtung 27 ist eine Trennstelle 28 dargestellt, die durch verschiedene Überwachungssignale (Batteriespannung der Bordnetzbatterie, Batteriespannung der Fahrbatterie, Zündschloß usw.) beeinflußbar ist und erst bei Vorliegen aller notwendigen Betriebsbedingungen geschlossen wird. Ein Kontakt der Trennstelle 28 der Steuereinrichtung 27 ist mit dem Pluspol einer Spannungsquelle 29 verbunden, deren Minuspol auf Masse 18 liegt. Die Spannungsquelle ist vorzugsweise die Bordnetzbatterie.

Zum Laden des Energiespeichers 14 wird der Netzstecker 20 in eine stationäre, mit einem elektrischen Netz verbundene Steckdose 30 eingesteckt. Wenn der Energiespeicher 14 aufgeladen ist, wird der Netzstecker 20 aus der stationären Steckdose 30 gezogen und in die Bordsteckdose 23 eingesteckt. Sofern die Trennstelle 28 der Steuereinrichtung 27 geschlossen ist, schließt sich damit ein Stromkreis ausgehend vom Schutzkontakt 21 des Netzsteckers 20 über den Schutzleiter der Anschlußleitung 19, das Bordladergehäuse 17, die Spannungsquelle 29, die Trennstelle 28, das Steuerelement 15, die elektrische Verbindungsleitung 26 und die Schutzkontakte 25 der Bordsteckdose 23. Das Steuerelement 15 spricht an und schließt die Schaltkontakte 13. Der Energiespeicher versorgt über den Fahrstromkreis 31 die Gleichstrommaschine 10, welche das Fahrzeug in Bewegung setzt.

Wird der Netzstecker 20 aus der Bordsteckdose 23 herausgezogen, oder liegt ein Defekt in dem Schutzleiter der Anschlußleitung 19 vor, so ist der beschriebene Überwachungsstromkreis unterbrochen, das Steuerelement 15 fällt ab, öffnet die Schaltkontakte 13 und unterbricht somit den Fahrstromkreis 31.

Diese hier beschriebene Anordnung ist auch bei nicht vorhandener Netzspannung wirksam, weil sie das Losfahren des Fahrzeuges nur ermöglicht, wenn der Netzstecker in die Bordsteckdose eingesteckt ist. Sie beinhaltet eine ständige Prüfung des Schutzleiters und somit einen Personen- und Fahrzeugschutz im Ladebetrieb.

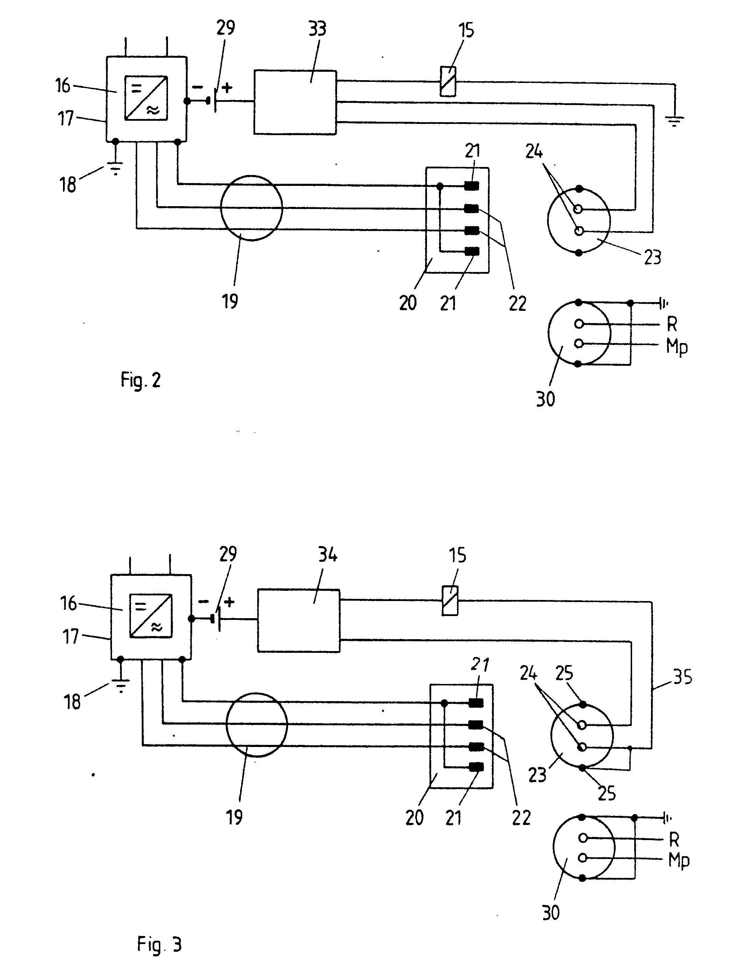

In Fig. 2 und 3 ist jeweils lediglich ein Überwachungsstromkreis dargestellt. Der an der Gleichstromseite des Bordladegerätes 16 angeschlossene Energiespeicher 14 sowie der Fahrstromkreis 31 gemäß Fig. 1 wurde nicht mitgezeichnet. Durch gleiche Bezugszeichen wurden gleiche Bauelemente gekennzeichnet.

Wie in Fig. 1 liegt in Fig. 2 und 3 die Steuereinrichtung 33, 34 an einer Spannungsquelle 29, deren Minuspol auf Masse liegt. Dies ist jedoch für die Wirkungsweise des hier beschriebenen Losfahrschutzes nicht notwendig.

Gemäß Fig. 2 sind zwei Ausgänge der Steuereinrichtung 33 mit zwei Polkontakten 24 der Bordsteckdose 23 verbunden. Die Steuereinrichtung 33 überwacht die Impedanz zwischen den beiden Polkontakten 24. Sie spricht erst an, wenn der Netzstecker 20 in die Bordsteckdose 23 eingesteckt ist und zwischen den Polkontakten 24 die Eingangsimpedanz des Bordladegerätes 16 gemessen werden kann. In diesem Fall wird das Steuerelement 15 an Spannung gelegt, so daß dieses die in Fig. 2 nicht dargestellten Schaltkontakte 13 schließt. Bei nicht eingestecktem Netzstecker 20 (wenn dieser beispielsweise in die stationäre Steckdose 30 eingesteckt ist), bei defekter Anschlußleitung 19 oder falschem Eingangsimpedanzwert des Bordladegerätes 16 spricht die Steuereinrichtung 33 nicht an, so daß auch das Steuerelement 15 nicht betätigt wird. Durch Mißbrauch (Überbrücken der Steckdose durch einen Kurzschlußstecker oder ein anderes Gerät) wird die Eingangsimpedanz des Bordladegerätes 16 gewöhnlich nicht richtig simuliert, so daß die Steuereinrichtung 33 hierbei nicht anspricht.

Wie in Fig. 2 sind auch in Fig. 3 zwei Ausgänge der Steuereinrichtung 34 mit den Polkontakten 24 der Bordsteckdose 23 verbunden. In einer Verbindungsleitung 35 liegt hier jedoch das Steuerelement 15. Die Verbindungsleitung 35 ist sowohl mit einem Polkontakt 24 als auch den Schutzkontakten 25 der Bordsteckdose 23 verbunden.

Durch diese Anordnung sind gleichzeitig zwei Überwachungsmöglichkeiten für die Steuereinrichtung 34 gegeben. Zum einen kann, wie zu Fig. 2 beschrieben, die Eingangsimpedanz zwischen den Polkontakten 24 der Bordsteckdose 23 gemessen werden. Bei Vorliegen des richtigen Impedanzwertes (der Netzstecker 20 ist in die Bordsteckdose 23 eingesteckt) wird durch die Steuereinrichtung 34 ein Anschluß des Steuerelementes 15 mit dem Pluspol der Spannungsquelle 29 verbunden. Andererseits kann das Steuerelement 15 nur dann ansprechen, wenn gleichzeitig sein anderer Anschluß auf Masse 18 liegt. Dies ist nur dann über die Schutzkontakte 25 der Bordsteckdose 23 und die Schutzkontakte 21 des Netzsteckers 20 gegeben, wenn kein Defekt in der Schutzleitung vorliegt.

## Patentansprüche

1. Losfahrschutz für ein Elektrofahrzeug, welches Antriebsaggregat (10), Energiespeicher (14), Ausschalter (13) zwischen Energiespeicher und Antriebsaggregat, wenigstens ein auf den Ausschalter einwirkendes Steuerelement (15) und ein Bordladegerät (16) mit Anschlußleitung (19) und Netzstecker (20) zum Anschluß an ein stationäres elektrisches Netz aufweist, dadurch gekennzeichnet, daß das Elektrofahrzeug eine Bordsteckdose (23) aufweist, in die der Netzstecker (20) einsteckbar ist, und daß wenigstens ein Kontakt (24, 25) der Bordsteckdose (23) durch eine elektrische Leitung (26, 35) mit den elektrischen Anschlüssen einer das Steuerelement (15) beeinflussenden Steuereinrichtung (27, 33, 34) verbunden ist, derart, daß nur bei in die Bordsteckdose (23) eingestecktem Netzstecker (20) ein ein Steuersignal für das Steuerelement auslösender Überwachungsstromkreis schließbar ist.

2. Losfahrschutz nach Anspruch 1, dadurch gekennzeichnet, daß zwischen den elektrischen Anschlüssen der Steuereinrichtung (27, 33, 34) und dem Bordladergehäuse (17), das mit dem Schutzkontakt (21) des Netzsteckers (20) verbunden ist, eine galvanische Verbindung besteht.

3. Losfahrschutz nach Anspruch 2, dadurch gekennzeichnet, daß in der Verbindung zwischen Steuereinrichtung (27, 33, 34) und Bordladergehäuse (17) eine Spannungsquelle (29) angeordnet ist, die die Steuereinrichtung (27, 33, 34) elektrisch versorgt.

4. Losfahrschutz nach Anspruch 3, dadurch gekennzeichnet, daß die Spannungsquelle (29) eine Bordnetzbatterie ist.

5. Losfahrschutz nach einem der Ansprüche 1 bis 4, dadurch gekennzeichnet, daß das Steuerelement (15) im Überwachungsstromkreis liegt.

6. Losfahrschutz nach einem der Ansprüche 1 bis 5, dadurch gekennzeichnet, daß das Steuerelement (15) eine auf den Ausschalter (13) einwirkende Relaisspule ist.

7. Losfahrschutz nach einem der Ansprüche 2 bis 6, dadurch gekennzeichnet, daß sich der Überwachungsstromkreis (32) zusammensetzt aus: Schutzkontakte (25) der Bordsteckdose (23), elektrische Verbindungsleitung (26) zur Steuereinrichtung (27) und Verbindungsleitung zwischen Steuereinrichtung (27) und Bordladergehäuse (17), welches mit einem Schutzgehäuse (21) des Netzsteckers (20) verbunden ist.

8. Losfahrschutz nach einem der Ansprüche 1 bis 6, dadurch gekennzeichnet, daß die Steuereinrichtung (33, 34) über wenigstens zwei elektrische Leitungen mit wenigstens zwei Polkontakten (24) der Bordsteckdose (23) verbunden ist, derart, daß bei in die Bordsteckdose (23) eingestecktem Netzstecker (20) über die Eingangsimpedanz des Bordladers (16) der Überwachungsstromkreis geschlossen ist.

9. Losfahrschutz nach Anspruch 8, dadurch gekennzeichnet, daß ein Polkontakt (24) der Bordsteckdose (23) mit einem Schutzkontakt (25) der Bordsteckdose (23) verbunden ist.

10. Losfahrschutz nach einem der Ansprüche 1 bis 9, dadurch gekennzeichnet, daß die Steuereinrichtung (27, 33, 34) Teil einer Steuerlogik ist, die neben dem Losfahrschutz andere Steuer- und Schutzfunktionen ausführt.

**Claims**

1. Anti-motion protection system for an electric vehicle which is provided with a drive unit (10), accumulator (14), circuit breaker (13) between the accumulator and drive unit, at least one control element (15) which acts on the circuit breaker and an on-board charging device (16) having a connecting line (19) and mains plug (20) for connection to a stationary electric mains system, characterised in that the elekctric vehicle is provided with an on-board socket (23) into which the mains plug (20) can be plugged and that at least one contact (24, 25) of the on-board socket (23) is connected by an electric line (26, 35) to the electric connections of a control device (27, 33, 34), which influences the control element (15), in such a manner that a monitoring circuit, which triggers a control signal for the control element, can be closed only if the mains plug (20) is plugged into the on-board socket (23).

2. Anti-motion protection system according to Claim 1, characterised in that a direct electrical connection exists between the electric connections of the control device (27, 33, 34) and the housing (17) of the on-board charging device, which housing is connected to the earth contact (21) of the mains plug (20).

3. Anti-motion protection system according to Claim 2, characterised in that in the connection between the control device (27, 33, 34) and the housing (17) of the on-board charging device a voltage source (29) is arranged which supplies electric power to the control device (27, 33, 34).

4. Anti-motion protection system according to Claim 3, characterised in that the voltage source (29) is an on-board supply system battery.

5. Anti-motion protection system according to one of Claims 1 to 4, characterised in that the control element (15) is located in the monitoring circuit.

6. Anti-motion protection system according to one of Claims 1 to 5, characterised in that the control element (15) is a relay coil which acts on the circuit breaker (13).

7. Anti-motion protection system according to one of Claims 2 to 6, characterised in that the monitoring circuit (32) is composed of: earth contacts (25) of the on-board socket (23), electric connecting line (26) to the control device (27) and connecting line between the control device (27) and the housing (17) of the on-board charging device, which housing is connected to an earth contact (21) of the mains plug (20).

8. Anti-motion protection system according to one of Claims 1 to 6, characterised in that the control device (33, 34) is connected via at least two electric lines to at least two pin contacts (24) of the on-board socket (23), in such a manner that when the mains plug (20) is plugged into the on-board socket (23), the monitoring circuit is closed via the input impedance of the on-board charging device (16).

9. Anti-motion protection system according to Claim 8, characterised in that one pin contact (24) of the on-board socket (23) is connected to an earth contact (25) of the on-board socket (23).

10. Anti-motion protection system according to one of Claims 1 to 9, characterised in that the control device (27, 33, 34) is a part of a control logic system which, apart from the anti-motion protection function, carries out other control and protection functions.

**Revendications**

1. Dispositif de protection contre le démarrage destiné à un véhicule électrique qui comprend une unité de commande (10), un accumulateur d'énergie (14), un coupe-curcuit (13) entre l'accumulateur d'énergie et l'unité de commande, au moins un élément pilote (15) agissant sur le coupe-circuit et un appareil (16) de chargement de bord ayant un conducteur de raccordement (19) et une fiche de réseau (20) destinée au raccordement à un réseau électrique fixe, caractérisé en ce que le véhicule électrique présente une prise de courant de bord (23) dans laquelle la fiche de réseau (20) peut être introduite et en ce qu'au moins un contact (24, 25) de la prise de courant de bord (23) est relié par un conducteur électrique (26, 35) aux raccordements électriques d'un dispositif de commande (27, 33, 34) agissant sur l'élément pilote (15), de telle manière que ce n'est que lorsque la fiche de réseau (20) est introduite dans la prise de courant (23) qu'on peut fermer un circuit de courant de surveillance déclenchant un signal de commande destiné à l'élément pilote.

2. Protection contre le démarrage selon la revendication 1, caractérisée en ce que, entre les raccordements électriques du dispositif de commande (27, 33, 34) et le boîtier (17) du chargeur de bord qui est relié au contact de protection (21) de la fiche de réseau (20), il y a une liaison galvanique.

3. Protection contre le démarrage selon la revendication 2, caractérisée en ce que, dans la liaison entre le dispositif de commande (27, 33, 34) et le boîtier (17) de chargeur de bord, se trouve une source de tension (29) qui alimente électriquement le dispositif de commande (27, 33, 34).

4. Protection contre le démarrage selon la revendication 3, caractérisée en ce que la source de tension (29) est une batterie de réseau de bord.

5. Protection contre le démarrage selon l'une des revendications 1 à 4, caractérisée en ce que l'élément pilote (15) se trouve dans le circuit de courant de surveillance.

6. Protection contre le démarrage selon l'une des revendications 1 à 5, caractérisée en ce que l'élément pilote (15) est une bobine de relais agissant sur le coupe-circuit (13).

7. Protection contre le démarrage selon l'une des revendications 2 à 6, caractérisée en ce que le circuit de courant de surveillance (32) est composé des contacts de protection (25) de la prise de courant de bord (23), du conducteur de liaison électrique (26) vers le dispositif de commande (27) et du conducteur de liaison entre le dispositif de commande (27) et le boîtier (17) de chargeur de bord, lequel est relié à un contact de protection (21) de la fiche de réseau (20).

8. Protection contre le démarrage selon l'une des revendications 1 à 6, caractérisée en ce que le dispositif de commande (33, 34) est relié par l'intermédiaire d'au moins deux conducteurs électriques à au moins deux contacts polaires (24) de la prise de courant de bord (23), de telle manière que, lorsque la fiche de réseau (20) est introduite dans la prise de courant de bord (23), le circuit de courant de surveillance est fermé sur l'impédance d'entrée du chargeur de bord (16).

9. Protection contre le démarrage selon la revendication 8, caractérisée en ce qu'un contact polaire (24) de la prise de courant de bord (23) est relié à un contact de protection (25) de la prise de courant de bord (23).

10. Protection contre le démarrage selon l'une des revendications 1 à 9, caractérisée en ce que le dispositif de commande (27, 33, 34) fait partie d'une logique de commande qui réalise, en plus de la protection contre le démarrage, d'autres fonctions de commande et de protection.

Fig. 1

Fig. 2

Fig. 3